# EUROPÄISCHE PATENTANMELDUNG

(11) **EP 2 863 020 A1**
(43) Veröffentlichungstag der Anmeldung: **22.04.2015**
(21) Anmeldenummer: 13188917.2
(22) Anmeldetag: 16.10.2013
(51) Int. Cl.: F01D 25/24

(54) **Turbinenschaufel, Ringsegment, zugehörige Turbinenschaufelanordnung, Stator, Rotor, Turbine und Kraftwerksanlage**

(71) Anmelder: Siemens Aktiengesellschaft, 80333 München (DE)
(72) Erfinder: Nihal, Kurt, 40231 Düsseldorf (DE); Ahmad, Fathi, 41564 Kaarst (DE); Radulovic, Radan, Dr., 44799 Bochum (DE)

(57) **Zusammenfassung**

Eine Turbinenschaufel (120, 130) für eine Turbine (100) mit einer Plattform (144), an der ein im Querschnitt profiliertes Schaufelblatt (174) angeordnet ist, wobei auf der dem Schaufelblatt (174) abgewandten Seite der Plattform (144) eine im Wesentlichen parallel zur Plattform (144) ausgerichtete Feder (148) zur Befestigung an einem Ringsegment (156) angeordnet ist, und ein Ringsegment (156) für eine Turbine (100), umfassend eine Nut (160) mit axialer Öffnungsrichtung zur Befestigung einer Turbinenschaufel (120, 130), sollen vermittels technisch besonders (162) der Nut (160) eine Anzahl von die Seitenwand (162) durchdringenden Kühlluftöffnungen (164) eingebracht.

## Beschreibung

Die Erfindung betrifft eine Turbinenschaufel für eine Turbine mit einer Plattform, an der ein im Querschnitt profiliertes Schaufelblatt angeordnet ist, wobei auf der dem Schaufelblatt abgewandten Seite der Plattform eine im Wesentlichen parallel zur Plattform ausgerichtete Feder zur Befestigung an einem Ringsegment angeordnet ist. Sie betrifft weiter ein Ringsegment für eine Turbine, umfassend eine Nut mit axialer Öffnungsrichtung zur Befestigung einer Turbinenschaufel.

Turbinenschaufeln der oben genannten Art dienen in Turbinen zur Umwandlung der Energie eines heißen Gasstroms in rotatorische Energie. Sie weisen typischerweise ein von Hohlräumen zur Führung von Kühlluft durchzogenes, in der Art einer Flugzeugtragfläche profiliertes Schaufelblatt auf, an das sich in Längsrichtung der Schaufel eine Plattform anschließt. An die Plattform schließt sich eine typischerweise eine Befestigung in der Art einer Nut-Feder-Verbindung an, die mindestens zwei schwalbenschwanzartig angeordnete Federn auf der Turbinenschaufel und zwei gegenüberliegende Nuten auf einem Ringsegment umfasst.

Die Plattform dient zur Abdichtung des Befestigungsbereichs gegen das in der Turbine strömende Heißgas. Sie ist dementsprechend ein thermisch vergleichsweise hoch belastetes Bauteil, ist aber nicht in gleichem Maße wie das Schaufelblatt von Kühlkanälen durchzogen. Es hat sich herausgestellt, dass daher gerade in den Randbereichen der Plattform das Schaufelmaterial im Betrieb oxidiert und es so zu Materialverlust kommt. Da dieser Materialverlust sehr ungleichförmig ist, ist es häufig schwierig, eine so beschädigte Turbinenschaufel instand zu setzen, so dass sie meist ausgetauscht werden muss. Lösungsansätze hierfür bestanden bislang darin, die wärmeisolierende Beschichtung im Bereich der Plattform zu verstärken, was jedoch den technischen Aufwand für die Herstellung und damit die Kosten erhöht. Zudem erhöht sich mit der Dicke der Beschichtung die Gefahr, dass diese im Betrieb abplatzt.

Es ist daher Aufgabe der Erfindung, eine Turbinenschaufel und ein Ringsegment der eingangs genannten Art anzugeben, die vermittels technisch besonders einfacher Maßnahmen eine höhere Lebensdauer aufweisen.

Diese Aufgabe wird bezüglich der Turbinenschaufel erfindungsgemäß gelöst, indem in die Feder eine Anzahl von die Feder durchdringenden Kühlluftöffnungen eingebracht ist.

Bezüglich des Ringsegments wird die Aufgabe gelöst, indem in die der Turbinenschaufel zugewandte Seitenwand der Nut eine Anzahl von die Seitenwand durchdringenden Kühlluftöffnungen eingebracht ist.

Die Erfindung geht dabei von der Überlegung aus, dass eine Reduzierung der Oxidation im Randbereich der Turbinenschaufel insbesondere durch eine Verbesserung der Kühlluftzufuhr in diesen Bereich erzielt werden könnte. Hierbei ergibt sich das Problem, dass gerade hier durch die komplex geformte und aufgrund der benötigten Stabilität massiv auszuformende Plattform- und Befestigungsbereich kaum Möglichkeiten für eine Innenkühlung der Plattform bietet. Allerdings wurde erkannt, dass es möglich ist, eine Prallkühlung der Plattforum mittels geschickt eingebrachter Kühlluftöffnungen im Befestigungsbereich zu erreicht. Hierzu werden die Kühlluftöffnungen beispielsweise in der Art von Schlitzen oder Bohrungen direkt in die Nut-Feder-Verbindung eingebracht, d. h. in die Feder der jeweiligen Turbinenschaufel und in die der Turbinenschaufel zugewandte Seitenwand der Nut des jeweiligen Ringsegments. Hierdurch wird ein Kühlluftkanal geschaffen, der aus dem Ringsegment, das mit Kühlluft beaufschlagt werden kann, bis zu dem Randbereich der Plattform führt.

Vorteilhafterweise sind die Kühlluftöffnungen dabei auf einen Randbereich der Plattform gerichtet. Hierdurch wird gewährleistet, dass der Kühlluftstrom aus den Kühlluftöffnungen gezielt auf die verstärkt durch Oxidation gefährdeten Randbereiche der Plattform geleitet wird.

Für die Nut-Feder-Verbindungen von Turbinenschaufeln gibt es verschiedene Ausgestaltungsmöglichkeiten: Grundsätzlich kann nämlich die Einschubrichtung der Federn in die Nuten parallel oder quer zur Gasstromrichtung verlaufen. Da besonders an den quer zur Gasstromrichtung, d. h. in Umfangsrichtung der Turbinenachse verlaufenden Rändern der Plattformen die Gefahr von Oxidation aufgrund des aufprallenden Gasstroms besonders hoch ist, ist gerade hier eine verstärkte Kühlung wünschenswert. Bei einer Einschubrichtung der Turbinenschaufel quer zur Gasstromrichtung, d. h. wenn Nut und Feder ebenfalls quer zur Gasstromrichtung ausgerichtet und damit unterhalb des im Gasstrom liegenden, besonders beanspruchten Randbereichs sind, sind daher die beschriebenen Kühlluftöffnungen von besonderem Vorteil. Sie sind also bezüglich der Turbinenschaufel vorteilhafterweise dann eingebracht, wenn die jeweilige Feder an der der Profilnase oder der Profilhinterkante zugeordneten Seite der Plattform angeordnet ist. Bezüglich des Ringsegments sind Kühlluftöffnungen in der Seitenwand der Nut vorteilhafterweise dann vorgesehen, wenn sich die jeweilige Nut entlang der Umfangsrichtung des Ringsegments erstreckt.

Weiterhin ist die Einbringung von Kühlluftöffnungen oder -bohrungen in die Nut-Feder-Verbindung der Turbinenschaufeln grundsätzlich sowohl für Leitschaufeln als auch für Laufschaufeln denkbar. Der Begriff Ringsegment wird hierbei so verstanden, dass er jedweden aus Segmenten (auch einem einzigen Segment) zusammengesetzten Ring zur Befestigung von Turbinenschaufeln bezeichnet, sowohl im Rotor als auch im Stator. Besonders vorteilhaft sind die beschriebenen Kühlluftbohrungen jedoch bei den Leitschaufeln. Das beschriebene, mit Kühlluftbohrungen in der Nutseitenwand versehene Ringsegment ist also vorteilhafterweise dem Stator der Turbine zugeordnet.

Ganz besonders vorteilhaft sind die Kühlluftöffnungen für die Plattform der Leitschaufeln, die der Welle der Turbine zugewandt ist. Hier ist die Plattform vorteilhafterweise einem Innenringsegment der Turbine zugeordnet, das beschriebene Ringsegment ist vorteilhafterweise als Innenringsegment ausgelegt. Durch die beschriebenen Kühlluftöffnungen wird die Kühlluft, die zur Kühlung des Innenringsegments verwendet wird, in der Art einer Doppelnutzung in der Nut-Feder-Verbindung nach außen zu den Randbereichen der Plattformen geleitet, kühlt diese ebenfalls und reduziert dort effektiv die Korrosion.

Bei einer Turbinenschaufelanordnung, die eine beschriebene Turbinenschaufel und ein beschriebenes Ringsegment umfasst und bei der die Feder der Turbinenschaufel in die Nut des Ringsegments eingreift, sind die Kühlluftöffnungen der Feder und der Nut vorteilhafterweise derart ausgerichtet, dass ein durchgehender Kühlluftkanal gebildet ist. Generell sind Geometrie und von Turbinenschaufel und Ringsegment so aufeinander abgestimmt, dass eine optimale Kühlluftleitung durch Feder und Seitenwand der Nut gewährleistet ist. Dabei umfasst der Begriff Ausrichtung sowohl die Anordnung der Kühlluftöffnungen als auch ihre Verlaufsrichtung.

Eine zwingende Ausrichtung der Kühlluftöffnungen der Turbinenschaufel mit denjenigen der Ringsegmente in Umfangsrichtung kann unterbleiben, wenn im Übergangsbereich von Ringsegment zu Turbinenschaufel ein Zwischenraum vorgesehen ist. Der Zwischenraum vergrößert den Übergabebereich für Kühlluft, um den Versatz der Kühlluftöffnungen der Turbinenschaufel zu den Kühlluftöffnungen der Ringsegmente zu kompensieren. Es hat sich dabei gezeigt, dass eine Breite des Sammelraums von Vorteil ist, die geringfügig größer ist als der Durchmesser der Kühlluftöffnungen. Dabei kann für jedes Paar an Kühlluftöffnungen jeweils ein Zwischenraum vorhanden sein, oder mehrere bzw. alle Paare sind über einen Zwischenraum miteinander gekoppelt.

In vorteilhafter Ausgestaltung ist die Feder dabei schmaler als die Nut. Insbesondere sind die Geometrie der Turbinenschaufel und des Ringsegments dabei so gewählt, dass der in der Nut entstehende Spalt durch die geringere Dicke der Feder auf der Plattform abgewandten Seitenwand der Nut angeordnet ist. Durch diesen Spalt kann dann aus Kühlluft eintreten, tritt durch die Kühlluftöffnungen in der Feder in die Kühlluftöffnungen auf der gegenüberliegenden Seitenwand der Nut ein und trifft von dort auf den Randbereich der Plattform.

Ein Stator oder Rotor für eine Turbine umfasst vorteilhafterweise eine derartige Turbinenschaufelanordnung. Hierbei kann die Turbinenschaufelanordnung sowohl im Verdichter als auch in der Turbine zum Einsatz kommen und ist für Leit- und Laufschaufeln möglich.

Eine Turbine umfasst vorteilhafterweise einen derartigen Stator und/oder Rotor.

Vorteilhafterweise ist die Turbine dabei als Gasturbine ausgelegt. Gerade in Gasturbinen sind die thermischen und mechanischen Belastungen besonders hoch, so dass die beschriebene Ausgestaltung der Turbinenschaufelanordnung besondere Vorteile hinsichtlich der Lebensdauer, der zulässigen Temperaturen und damit auch des Wirkungsgrads bietet.

Eine Kraftwerksanlage umfasst vorteilhafterweise eine derartige Turbine.

Die mit der Erfindung erzielten Vorteile bestehen insbesondere darin, dass durch die Einbringung von Kühlluftöffnungen in die Nut-Feder-Verbindung zwischen Ringsegment und Turbinenschaufel zur Kühlung der Randbereiche der Plattform die Korrosion in diesem Bereich erheblich vermindert wird. Dies erhöht die Lebensdauer und führt zu geringerem Verschleiß und reduziertem Wartungsaufwand. Alternativ kann bei gleichbleibender Lebensdauer die Dicke der Beschichtung verringert werden. Die Plattformspannungen werden durch die Reduktion der thermalen Gradienten ebenfalls verringert, was eine verminderte Neigung zur Rissbildung zur Folge hat. Die Maßnahme erfordert auch keine zusätzliche Kühlluft, sondern verbessert lediglich die Ausnutzung der bereits vorhandenen Kühlluft. Dies ist vorteilhaft hinsichtlich des Wirkungsgrads der Turbine. Gleichzeitig erfordert diese Maßnahme vergleichsweise geringen technischen Aufwand und erlaubt eine kostengünstige Realisierung der genannten Vorteile. Die so gebildete Turbinenschaufelanordnung ist auch problemlos nachrüstbar.

Ein Ausführungsbeispiel der Erfindung wird anhand einer Zeichnung näher erläutert. Darin zeigen:
- FIG 1: einen teilweisen Längsschnitt durch eine Gasturbine,
- FIG 2: eine perspektivische Ansicht eines Randbereichs der Plattform einer Leitschaufel,
- FIG 3: eine perspektivische Ansicht eines Innenringsegments,
- FIG 4: eine perspektivische Ansicht einer Turbinenschaufelanordnung mit der Leitschaufel aus FIG 2 und dem Innenringsegment aus FIG 3, und
- FIG 5: eine perspektivische Ansicht der Turbinenschaufelanordnung aus FIG 4 mit verändertem Blickwinkel und teildurchsichtig skizzierter Leitschaufel.

Gleiche Teile sind in allen Figuren mit denselben Bezugszeichen versehen.

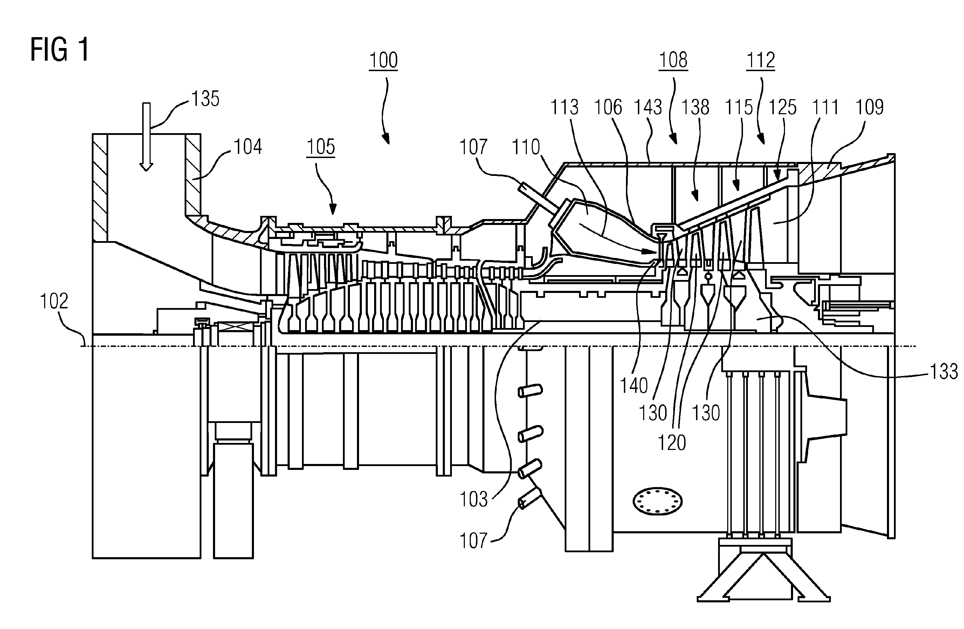

Die FIG 1 zeigt eine Turbine 100, hier eine Gasturbine, in einem Längsteilschnitt. Eine Turbine 100 ist eine Strömungsmaschine, welche die innere Energie (Enthalpie) eines strömenden Fluids (Flüssigkeit oder Gas) in Rotationsenergie und letztlich in mechanische Antriebsenergie umwandelt.

Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 106, hier eine Ringbrennkammer, mit mehreren koaxial angeordneten Brennern 107, eine Turbine 108 und das Abgasgehäuse 109.

Die Ringbrennkammer 106 kommuniziert mit einem ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die Schaufeln 120, 130 sind leicht gekrümmt profiliert, ähnlich einer Flugzeugtragfläche.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. Die Laufschaufeln 120 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 106 verbrannt. Von dort aus strömt das Arbeitsmedium 113 entlang des Heißgaskanals 111 vorbei an den Leitschaufeln 130 und den Laufschaufeln 120.

Dem Fluidstrom wird durch die möglichst wirbelfreie laminare Umströmung der Turbinenschaufeln 120, 130 ein Teil seiner inneren Energie entzogen, der auf die Laufschaufeln 120 der Turbine 108 übergeht. Über diese wird dann der Rotor 103 in Drehung versetzt, wodurch zunächst der Verdichter 105 angetrieben wird. Die nutzbare Leistung wird an die nicht dargestellte Arbeitsmaschine abgegeben.

Die dem heißen Arbeitsmedium 113 ausgesetzten Bauteile unterliegen während des Betriebes der Gasturbine 100 thermischen Belastungen. In der Gasturbine 100 herrschen Temperaturen von bis zu 1500 Grad Celsius, da höhere Temperaturen einen besseren Wirkungsgrad bedeuten. Die Leitschaufeln 130 und Laufschaufeln 120 insbesondere der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Die hohen Belastungen machen höchstbelastbare Werkstoffe erforderlich. Die Turbinenschaufeln 120, 130 werden daher aus Titan-Legierungen, Nickel-Superlegierung oder Wolfram-Molybdän-Legierungen gefertigt.

Die Schaufeln 120, 130 werden für höhere Resistenz gegen Temperaturen sowie Erosion wie zum Beispiel Lochfraß, auch bekannt unter "pitting corrosion", durch Beschichtungen gegen Korrosion (MCrAlX; M = Fe, Co, Ni, Seltene Erden) und Wärme (Wärmedämmschicht, beispielsweise ZrO2, Y204-Zr02) geschützt. Die Beschichtung zur Hitzeabschirmung wird Thermal Barrier Coating bzw. kurz TBC genannt. Weitere Maßnahmen, um die Schaufeln hitzeresistenter zu machen, bestehen in ausgeklügelten Kühlkanalsystemen. Diese Technik wird sowohl in den Leit- als auch in den Laufschaufeln 120, 130 angewendet.

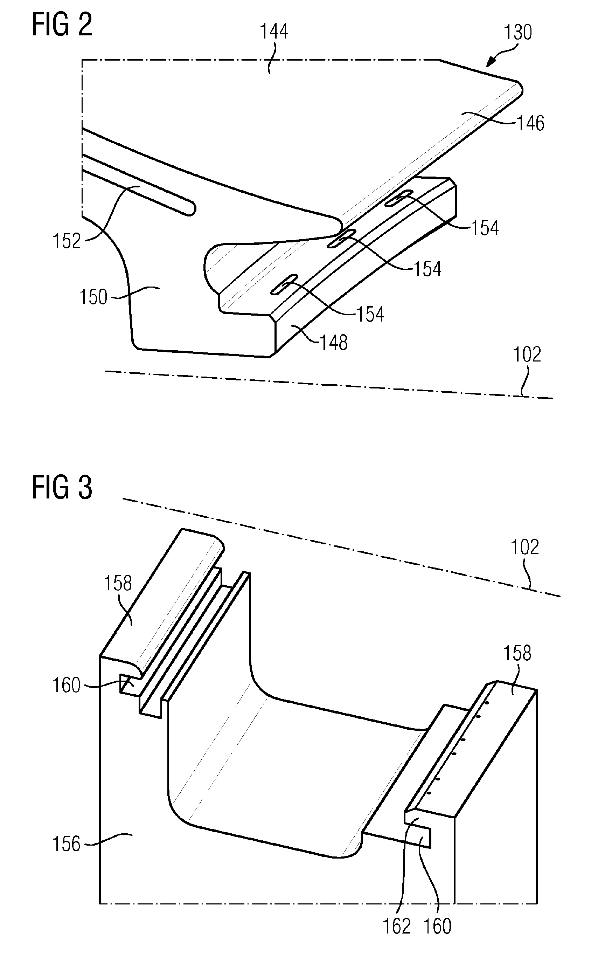

Jede Leitschaufel 130 weist neben dem eigentlichen Schaufelblatt einen auch als Plattform 144 bezeichneten, dem Innengehäuse 138 der Turbine 108 zugewandten Leitschaufelfuß (siehe FIG 2 bis 5) und einen dem Leitschaufelfuß gegenüberliegenden Leitschaufelkopf auf. Der Leitschaufelkopf ist dem Rotor 103 zugewandt und an einem Innenring 140 des Stators 143 festgelegt. Jeder Innenring 140 umschließt dabei die Welle des Rotors 103. Ebenso weist jede Laufschaufel einen derartigen Laufschaufelfuß auf, endet jedoch in einer Laufschaufelspitze.

Die Plattform 144 einer Leitschaufel 130 am Leitschaufelkopf ist in FIG 2 gezeigt. Insbesondere ist der Randbereich 146 der Plattform 144 an derjenigen Seite gezeigt, die zur Hauptströmungsrichtung des Heißgases quer angeordnet ist. FIG 2 zeigt diesen Bereich in einer perspektivischen Ansicht. Zur Verdeutlichung der Lage der Leitschaufel 130 ist die Richtung der Achse 102 der Turbine 100 (allerdings aufgrund der Übersicht mit unkorrekter Lage) mit eingezeichnet.

Zur Befestigung der Leitschaufel 130 am Innenring 140 weist diese eine Feder 148 auf, die sich parallel zur Plattform 144 in bezogen auf die Achse 102 axialer Richtung vom zentralen Bereich der Plattform 144 weg erstreckt. Sie verläuft über die gesamte Umfangsbreite der Plattform 144 und ist an einem Vorsprung 150 der Plattform 144 befestigt. Plattform 144, Vorsprung 150 und Feder 148 sind einteilig gegossen.

FIG 2 zeigt im eher zentralen Bereich der Plattform 144 einen parallel zur Plattformoberfläche verlaufenden, schlitzartigen Kühlkanal 152. Dieser reicht jedoch nicht bis in den Randbereich 146. Um auch im Randbereich 146 eine zuverlässige Kühlung zu ermöglichen, weist die Feder 148 drei Kühlluftöffnungen 154 auf, die die Feder in bezogen auf die Achse 104 radialer Richtung vollständig durchziehen. Sie sind als in Umfangsrichtung erstreckte, in regelmäßigem Abstand angeordnete Schlitze ausgestaltet und weisen aufgrund der radialen Durchtrittsrichtung und der Anordnung der Feder 148 unterhalb des Randbereichs 146 direkt auf den Randbereich 146.

FIG 3 zeigt in perspektivischer Ansicht ein Innenringsegment 156 eines Innenrings 140, der aus mehreren solcher Innenringsegmente 156 torusartig zusammengesetzt ist. Zur Verdeutlichung der Lage des Innenringsegments 156 ist wiederum die Richtung der Achse 102 der Turbine 100 (allerdings aufgrund der Übersicht mit unkorrekter Lage) mit eingezeichnet. Die perspektivische Ansicht der FIG 3 blickt dabei in radialer Richtung von außen auf das Innenringsegment 156.

Das Innenringsegment 156 weist ein in Umfangsrichtung hufeisen- oder U-förmiges Profil auf, an dessen Enden 158 jeweils in axialer Richtung nach außen Nuten 160 eingebracht sind, die sich entlang der Umfangsrichtung über die gesamte Breite des Innenringsegments 156 erstrecken. Diese Nuten 160 dienen zur Fixierung der Federn 148 der Leitschaufel 130.

In die Seitenwand 162 der in der FIG 3 rechten Nut 160, die radial weiter außen angeordnet ist, sind in radialer Richtung weisend drei Paare von Kühlluftöffnungen 164 eingebracht. Diese sind als Bohrungen ausgeführt und in regelmäßigen Abständen angeordnet.

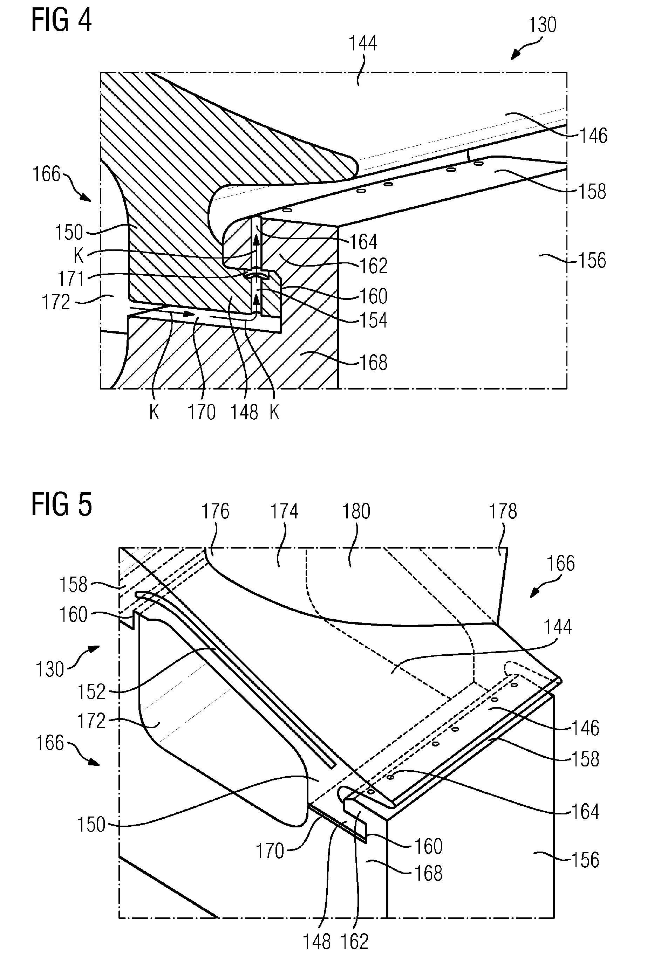

Die genaue Anordnung der Kühlluftöffnungen 154, 164 ist in FIG 4 gezeigt, die eine Turbinenschaufelanordnung 166 mit der Leitschaufel 130 aus FIG 2 und dem Innenringsegment 156 aus FIG 4 aus ähnlicher Perspektive ausschnittsweise zeigt. In FIG 4 sind diese Teile jedoch im Bereich der Kühlluftöffnungen 154, 164 und eines optionalen Zwischenraums 171 im Schnitt gezeigt, um deren Positionierung deutlich zu machen.

Zunächst sind die Geometrie des Innenringsegments 156 und der Leitschaufel 130 so aufeinander abgestimmt, dass Feder 148 und Nut 160 ineinander greifen. Hierbei liegt die Feder 148 an der Seitenwand 162 an, ist aber schmaler als die Nut 160. Dadurch verbleibt ein Abstand zur gegenüberliegenden Seitenwand 168 der Nut 160, so dass hier ein Spalt 170 gebildet wird. Diese Spalt 170 reicht bis in den zwischen Plattform 144 und Innenringsegment 156 gebildeten Hohlraum 172.

Die Kühlluftöffnungen 154, 164 in Feder 148 und Seitenwand 168 sind dabei so angeordnet, dass sie einen durchgängigen Kühlluftkanal in radialer Richtung bilden. Genauer münden die Paare von als Bohrung ausgestalteten Kühlluftöffnungen 164 in der Seitenwand 162 in jeweils in den Endbereichen einer als Schlitz ausgestalteten Kühlluftöffnung 154 der Feder 148.

Der Weg der Kühlluft K ist in FIG 4 ebenfalls gezeigt. Sie zirkuliert im Hohlraum 172 und tritt von dort in den Spalt 170 ein. Von dort strömt sie durch die Kühlluftöffnungen 154, 164 und trifft auf den Randbereich 146 der Plattform 144. Hier wird dadurch eine effektive Prallkühlung erreicht.

FIG 5 zeigt zur Verdeutlichung noch einmal einen breiteren Ausschnitt der Turbinenschaufelanordnung 166 aus FIG 4, jedoch hier nicht mit seitlichem Schnitt von Leitschaufel 130 und Innenringsegment 156, sondern als Aufsicht mit durchsichtiger Leitschaufel 130. FIG 5 zeigt insbesondere den geschlossenen Hohlraum 172 noch einmal deutlich.

Weiterhin zeigt FIG 5 noch die Lage des Schaufelblatts 174. Dieses steht im Wesentlichen senkrecht von der Plattform 144 ab und weist ein tragflächenartiges Profil. Hinsichtlich des Profils ist in FIG 5 die Profilnase 176, die Hinterkante 178 und die Saugseite 180 gezeigt. Die Kühlluftöffnungen 154, 164 sind an der der Hinterkante 178 zugeordneten Seite der Plattform 144 angeordnet.

Die Kühlluftöffnungen 154, 164 in der Nut-Feder-Verbindung der Turbinenschaufelanordnung 166 wurde hier anhand einer Nut 160 der Leitschaufel 130 erläutert, an der sie an jeglicher Nut 160 sowohl am Leitschaufelkopf als auch am Leitschaufelfuß zur Anwendung kommen können. Ebenso sind sie jedoch an den Laufschaufeln 120 zu realisieren.

## Patentansprüche

1. Turbinenschaufel (120, 130) für eine Turbine (100) mit einer Plattform (144), an der ein im Querschnitt profiliertes Schaufelblatt (174) angeordnet ist,
wobei auf der dem Schaufelblatt (174) abgewandten Seite der Plattform (144) eine im Wesentlichen parallel zur Plattform (144) ausgerichtete Feder (148) zur Befestigung an einem Ringsegment (156) angeordnet ist,
wobei in die Feder (148) eine Anzahl von die Feder (148) durchdringenden Kühlluftöffnungen (154) eingebracht ist.

2. Turbinenschaufel (120, 130) nach Anspruch 1,
bei der die Kühlluftöffnungen (154) auf einen Randbereich (146) der Plattform (144) gerichtet sind.

3. Turbinenschaufel (120, 130) nach einem der vorhergehenden Ansprüche,
bei der die jeweilige Feder (148) an der der Profilnase oder der Profilhinterkante zugeordneten Seite der Plattform (144) angeordnet ist.

4. Turbinenschaufel (120, 130) nach einem der vorhergehenden Ansprüche,
die als Leitschaufel (130) ausgelegt ist.

5. Turbinenschaufel (120, 130) nach einem der vorhergehenden Ansprüche,
bei der die Plattform (144) einem Innenringsegment (156) der Turbine (100) zugeordnet ist.

6. Ringsegment (156) für eine Turbine (100),
umfassend eine Nut (160) mit axialer Öffnungsrichtung zur Befestigung einer Turbinenschaufel (120, 130),
wobei in die der Turbinenschaufel (120, 130) zugewandte Seitenwand (162) der Nut (160) eine Anzahl von die Seitenwand (162) durchdringenden Kühlluftöffnungen (164) eingebracht ist.

7. Ringsegment (156) nach Anspruch 6,
bei dem sich die jeweilige Nut (160) entlang der Umfangsrichtung des Ringsegments (156) erstreckt.

8. Ringsegment (156) nach Anspruch 6 oder 7,
welches dem Stator (143) der Turbine (100) zugeordnet ist.

9. Ringsegment (156) nach einem der Ansprüche 6 bis 8, welches als Innenringsegment (156) ausgelegt ist.

10. Turbinenschaufelanordnung (166),
umfassend eine Turbinenschaufel (120, 130) nach einem der Ansprüche 1 bis 5 und ein Ringsegment (156) nach einem der Ansprüche 6 bis 9,
wobei die Feder (148) der Turbinenschaufel (120, 130) in die Nut (160) des Ringsegments (156) eingreift und die Kühlluftöffnungen (154, 164) der Feder (148) und der Nut (160) derart ausgerichtet sind, dass ein durchgehender Kühlluftkanal mit oder ohne Zwischenschaltung eines Zwischenraums gebildet ist.

11. Turbinenschaufelanordnung (166) nach Anspruch 10,
bei der die Feder (148 schmaler als die Nut (160) ist.

12. Stator (143) oder Rotor (103) für eine Turbine (100) mit einer Turbinenschaufelanordnung (166) nach Anspruch 11.

13. Turbine (100) mit einem Stator (143) und/oder Rotor (103) nach Anspruch 12.

14. Turbine (100) nach Anspruch 13,
die als Gasturbine (100) ausgelegt ist.

15. Kraftwerksanlage mit einer Turbine (100) nach Anspruch 13 oder 14.
